# EUROPÄISCHE PATENTSCHRIFT

(11) **EP 0 839 740 B1**
(45) Veröffentlichungstag und Bekanntmachung des Hinweises auf die Patenterteilung: **23.01.2002**
(21) Anmeldenummer: 97117631.8
(22) Anmeldetag: 11.10.1997
(51) Int. Cl.: B65G 53/46

(54) **Zellenradschleuse mit schnellwechselbarer Dichtungsanordnung**
Cellular rotary valve with quick-change seal arrangement
Vanne à roue cellulaire avec garniture d'étanchéité à changement rapide

(30) Priorität: 01.11.1996 DE 19645097
(43) Veröffentlichungstag der Anmeldung: 06.05.1998
(73) Patentinhaber: MOTAN-FULLER Verfahrenstechnik GmbH, 88242 Weingarten (DE)
(72) Erfinder: Heep, Dieter, 88368 Bergatreute (DE)
(74) Vertreter: Riebling, Peter, Dr.-Ing.

(56) Entgegenhaltungen:
- DE-A- 3 927 393
- DE-A- 4 244 655
- DE-C- 3 742 519

## Beschreibung

Die Erfindung betrifft eine Zellenradschleuse der im Oberbegriff des Anspruchs 1 angegebenen Art. Zellenradschleusen dieser Art dienen zum Einschleusen von Schüttgut in pneumatische Förderanlagen, insbesondere von Kunststoffgranulat in Dichtstromförderanlagen, mit Förderdrücken bis delta p gleich oder kleiner 3 bar Überdruck.

Sie haben als Merkmal geschlossene Zellenräder, d.h. seitlich angeordnete Seitenscheiben an den Zellenradstegen, in die eine radial oder axial wirkende Dichtringanordnung integriert ist.

Um die Dichtung, aus Lebensdauergründen, von den Durchbiegekräften zu entlasten, werden erhebliche Anstrengungen unternommen.

Die DE 40 19 628 C2 beschreibt eine Lösung, in der die Dichtungsanordnung der Biegebewegung des Zellenrades folgt, da die Teile, die mit den Zellenradseitenscheiben die Dichtungsanordnung bilden, auf der Welle drehbar gelagert sind.

In zunehmendem Maße werden diese Zellenradschleusen auch für abrasive Produkte eingesetzt. Aus diesem Grund müssen die Dichtringe in kürzeren Intervallen gewechselt werden.

Verwendet man bei der DE 40 19 628 C2 sogenannte Schnellreinigungsausführungen zum Öffnen der Schleuse und Herausnehmen des Zellenrades, so verbleiben beide Dichtungsanordnungen im zusammengebauten Zustand. Erst eine komplette Demontage ermöglicht den Zugriff auf die radialen Dichtringe. Dies ist zeitaufwendig und muß daher nach Ausbau der Zellenradschleuse vorort nach dem Transport in einer gut ausgerüsteten Werkstatt durchgeführt werden.

Die DE 39 27 393 A1 beschreibt eine Zellenradschleuse zum Austrag von pulverigen oder staubartigen Gütern aus einem Behälter, wobei die Zellenradschleuse im Bereich der Enden der Nabe gehäusefeste Seitendeckel besitzt. In jedem der beiden Seitendeckel ist ein Lager für die Nabe vorgesehen und jeweils eine in eine innere und eine äußere Teilseitenscheibe geteilte Seitenscheibe angeordnet. Jeweils zwischen der inneren Seitenscheibe und dem Gehäuse sind radial dichtende Kolbenringe vorgesehen. Zwischen der inneren und der äußeren Seitenscheibe sind jeweils axial abdichtende Anschlagringe vorgesehen. Die jeweilige innere Seitenscheibe ist hierbei mit der Nabe drehfest verbunden und die jeweilige äußere Seitenscheibe ist drehfest mit dem jeweiligen Seitendeckel verbunden.

Nachteil hierbei ist, daß die jeweiligen inneren und äußeren Seitenscheiben relativ zueinander verdreht werden können, was zu einem erhöhten Verschleiß der axial dichtenden Anschlagringe zwischen den Seitenscheiben führt.

Weiterer Nachteil ist, daß die jeweiligen radial dichtenden Kolbenringe zwischen den inneren Seitenscheiben und dem Gehäuse schwer zugänglich sind und damit nur mit erhöhtem Aufwand wartbar sind, wobei gerade diese Dichtung durch die naturgemäße Durchbiegung der Nabe im Betrieb stark belastet wird und daher oft gewartet und ausgetauscht werden muß.

Der Erfindung liegt die Aufgabe zugrunde, eine Zellenradschleuse mit geschlossenen Zellenrädern der zuvor genannten Art derart weiter zu bilden, daß die Dichtungen schnell und einfach gewartet und betriebsbereit gehalten werden können und daß die Lebensdauer der Dichtungen erhöht werden.

Die Lösung dieser Aufgabe gelingt durch die kennzeichnenden Merkmale des Patentanspruchs 1.

Wesentliches Merkmal der vorliegenden Erfindung ist, daß die äußere Seitenscheibe an dem Seitendeckel drehbar befestigt ist, wodurch die innere und die äußere Seitenscheibe gemeinsam drehen können, jedoch gegeneinander eine Verschiebebewegung zumindest in radialer Richtung ausführen können.

Die Zellenradschleuse ist nun also mit jeweils einem linken und rechten Seitendeckel ausgebildet, wobei in jedem Seitendeckel die Lageranordnung für die Zellenradachse angeordnet ist und in dem Seitendeckel jeweils eine 2-fach geteilte Seitenscheibe angeordnet ist, wobei die innere Seitenscheibe dem Zellenrad zugeordnet ist und die äussere Seitenscheibe dem jeweiligen Seitendeckel und daß zwischen den beiden Seitenscheiben die radiale Dichtungsanordnung angeordnet ist.

Damit ergibt sich der wesentliche Vorteil, daß diese radiale Dichtungsanordnung nun besonders leicht zugänglich und damit auch leicht auswechselbar ausgebildet ist. Man muß nämlich jetzt nur noch den jeweiligen Seitendeckel entfernen, wobei mit dem Seitendeckel erfindungsgemäss die dem Seitendeckel zugeordnete Seitenscheibe entfernt wird, weil diese Seitenscheibe mit dem Seitendeckel verbunden ist.

Nachdem die radiale Dichtungsanordnung im Zwischenraum zwischen der inneren und der äusseren Seitenscheibe angeordnet ist, ist nun diese radiale Dichtungsanordnung besonders einfach zugänglich.

Hierbei bleibt es offen und wird im Rahmen der vorliegenden Erfindung umfasst, ob nun die radiale Dichtungsanordnung an der inneren Seitenscheibe verbleibt und dementsprechend leicht zugänglich ist oder ob die radiale Dichtungsanordnung der äusseren Seitenscheibe zugeordnet ist und mitsamt der äusseren Seitenscheibe und dem Seitendeckel entfernt werden kann.

Kern der Erfindung ist also, daß das Zellenrad in jedem der beiden Seitendeckel eine zweifach teilbare Seitenscheibe besitzt, deren Teilseitenscheiben sich nach dem Öffnen trennen, wobei die am Zellenrad verbleibenden Seitenscheiben über die Welle im Seitendeckel gelagert und die im Seitendeckel verbleibenden Seitenscheiben auf einer eigenen Nabe drehbar gelagert sind. Nach der Trennung wird auf beiden Seiten der Dichtring zur Untersuchung und eventuellen Auswechslung frei.

Bei Neumontage verbinden sich die getrennten Seitenscheiben zu zwei sich gemeinsam drehenden Einheiten, wobei sie am Umfang die Kaverne für die Dichtringeinheit bilden.

Die Biegekompensation ist gewährleistet, da sich die theoretischen Mittelpunkte während der Drehung auf den gemeinsamen Dicht-O-Ringen zueinander verschieben.

Hierunter wird verstanden, daß sich die Zellenradachse unter Belastung verbiegt. Hierdurch werden entsprechende Biegekräfte auch auf die radiale Dichtungsanordnung eingeleitet. Durch die Zweiteilung der Seitenscheiben wird nun erreicht, daß die innere Seitenscheibe stets fest mit dem Zellenradsteg verbunden ist, und dementsprechend die Verformungsarbeit des Zellenrades mitmacht, während die äussere Seitenscheibe mit dem Seitendeckel verbunden ist und dementsprechend auf Position bleibt. Die beiden Seitenscheiben führen also gegeneinander eine gewisse Verschiebebewegung in radialer Richtung, um z.B. 2/10 mm gegeneinander aus.

Hierbei wird es bevorzugt, wenn diese radiale Dichtungsanordnung aus einem mehrteiligen Dichtring besteht, dem noch weitere radiale Dichtringe zugeordnet sind, nämlich bevorzugt ein weiterer O-Ring und ein dazugehörender Stützring, die auf unterschiedlichen radialen Abständen zur Zellenradachse angeordnet sind.

Diese gesamte Dichtungsanordnung führt also das vorher beschriebene Bewegungsspiel aus, wodurch stets in allen Belastungszuständen für eine ausreichende Abdichtung gesorgt wird.

Selbstverständlich ist die vorliegenden Erfindung nicht auf diese Art der beschriebenen Dichtungen beschränkt; es könnte auch eine Stopfbuchse (Packungsschnur) oder ein Lippendichtring verwendet werden. Maßgebend ist nur die Teilung der Seitenscheibe in eine innere und eine äussere Seitenscheibe, wo zwischen den beiden Seitenscheiben die entsprechende Dichtungsanordnung angeordnet ist.
Hierbei besteht also der Vorteil - wie obenstehend erwähnt - daß beim Ausbau des Deckels auch die äussere Seitenscheibe mit dem Deckel mit abgenommen wird und hierdurch dann die zwischen den beiden Seitenscheiben angeordnete Dichtungsanordnung frei zugänglich und leicht auswechselbar ist.

Im folgenden wird die Erfindung anhand von lediglich einen Ausführungsweg darstellenden Zeichnungen näher erläutert. Hierbei gehen aus den Zeichnungen und ihrer Beschreibung weitere vorteilhafte Merkmale und Vorteile der Erfindung hervor.

Es zeigen:
- Figur 1:: Schnitt durch die Festlagerseite einer Zellenradschleuse nach der Erfindung,
- Figur 2:: Schnitt durch die Antriebslagerseite der gleichen Zellenradschleuse mit teilweise abgebautem Seitendeckel.

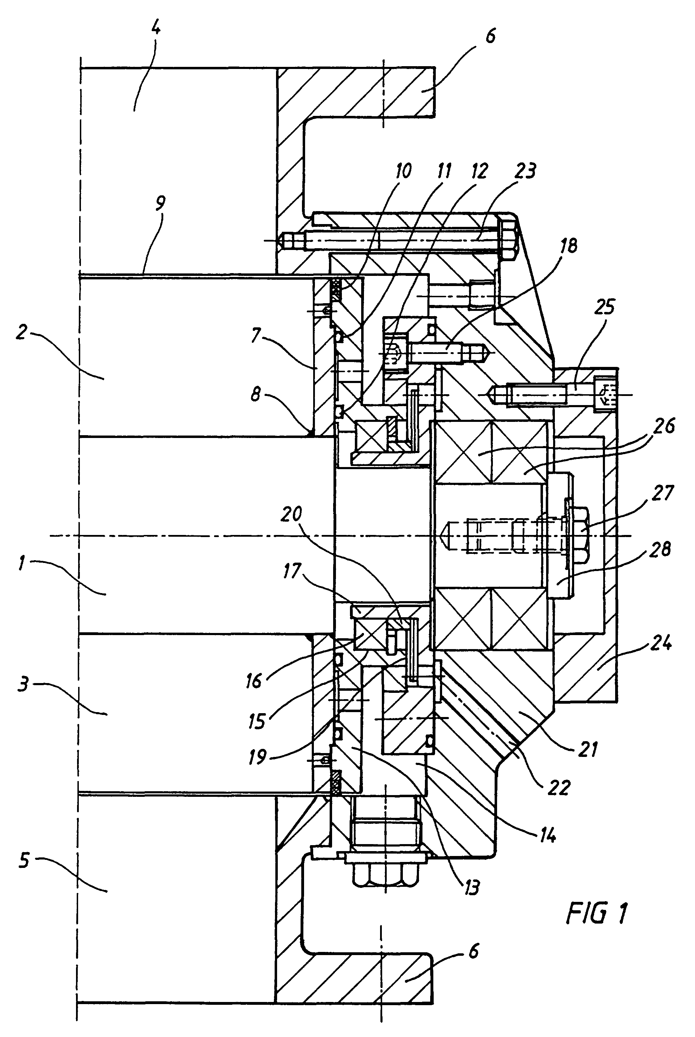

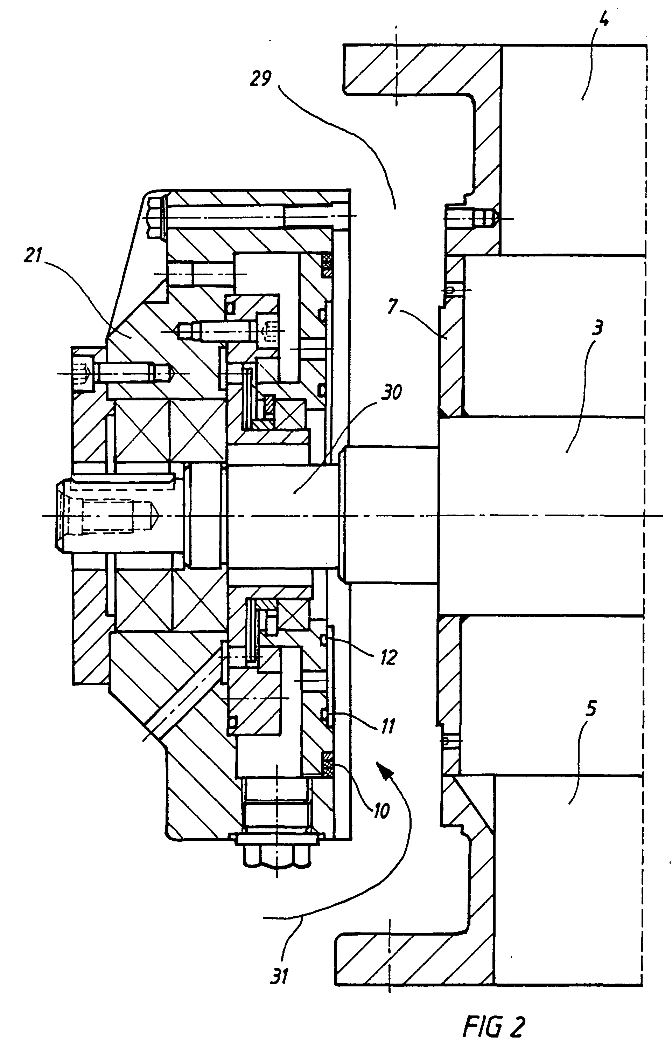

In den Figuren 1 und 2 ist also die linke und die rechte Seite einer Zellenradschleuse dargestellt, wobei in der Figur 2 nicht mehr alle Teile bezeichnet sind, nachdem diese bereits schon in Figur 1 zeichnerisch dargestellt und entsprechend der nachfolgenden Beschreibung beschrieben worden sind.

In ansich bekannter Weise sind auf einer Zellenradachse 1 eine Reihe von Zellenradstegen 2,3 drehfest angeordnet, die in Verbindung mit zugeordneten Gehäusekanten einen Dichtungsspalt 9 ausbilden. An der Oberseite des Gehäuses der Zellenradschleuse ist ein Gehäuseflansch 6 für einen Einlauf 4 und an der Unterseite ein weiterer Gehäuseflansch 6 für einen Auslauf 5 angeordnet.

Wichtig ist nun, daß eine innere Seitenscheibe 7 über Schweißstellen 8 oder andere Befestigungsmittel unmittelbar mit dem umlaufenden Teil der Zellenradschleuse, z.B. der Zellenradachse 1 oder den Zellenradstegen 2, verbunden ist. Die Seitenscheibe 7 läuft also mit dem Zellenrad um.

Demgegenüber liegt eine auf dem Seitendeckel 21 drehend gelagerte Seitenscheibe 13, die in Verbindung mit der inneren Seitenscheibe 7 eine radiale Dichtungsanordnung definiert. Diese radiale Dichtungsanordnung besteht aus einem äusseren mehrteiligen Dichtring 10, aus einem radial darunter liegenden O-Ring 11 und aus einem weiteren radial darunter liegenden O-Ring 12.

Die Lagerung der äusseren Seitenscheibe 13 erfolgt dergestalt, daß sie einen axialen Bund aufweist, an dem eine Nut zur Aufnahme eines Lagers 16 eingefräst ist. Dieses Lager 16 wird von einem axialen Ring 20 und einer Tellerfeder 19 in axialer Richtung vorgespannt, wobei die Tellerfeder 19 sich einerseits an dem Ring 20 und andererseits an einem radialen Bund einer Nabe 17 abstützt, welche einerseits das Lager 16 trägt und welche andererseits mittels Schrauben 18 an dem Seitendeckel 21 befestigt ist.

Durch den Seitendeckel 21 läuft ein Kanal 22, der sich bis in einen inneren Hohlraum 14 erstreckt, welcher der Entlüftung dient. Der Seitendeckel 21 ist mittels Schrauben 23, die gleichmässig am Umfang verteilt angeordnet sind, an dem Gehäuseflansch 6 lösbar befestigt.

Im übrigen trägt der Seitendeckel 21 einen äusseren Schutzdeckel 24, der mittels Schrauben 25 an diesem befestigt ist. Der Schutzdeckel 24 deckt die beiden Traglager 26 ab, welche zwischen dem Seitendeckel 21 und einem zugeordneten Bund 30 der Zellenradachse 1 angeordnet sind.

Die beiden Traglager 26 werden durch eine Schraube 27 und eine zugeordnete Scheibe 28 in axialer Richtung vorgespannt.

Aus Figur 2 lässt sich nun die leichte Zugänglichkeit der radialen Dichtungsanordnung 10,11,12 entnehmen. Werden nämlich die Schrauben 23 gelöst, dann kann der gesamte Seitendeckel 21 in axialer Richtung gemäss Figur 2 abgezogen werden und von dem Bund 30 der Zellenradachse 1 entfernt werden, wodurch sich ein relativ großer Freiraum 29 ergibt, in den man in Pfeilrichtung 31 zu den Dichtungen 10,11,12 gelangt und diese leicht auswechseln kann.

Selbstverständlich ist die Erfindung nicht auf diese Dichtungsanordnung 10,11,12 beschränkt; sie könnte auch anderes ausgebildet sein.

Ebenso ist es möglich, die gesamte Dichtungsanordnung 10,11,12 im Bereich inneren der Seitenscheibe 7 anzuordnen.

## Patentansprüche

1. Zellenradschleuse mit schnellwechselbarer Dichtungsanordnung zum Einschleusen von Schüttgut in pneumatische Förderanlagen, beinhaltend ein Zellenrad (1-3) in Form von auf einer Zellenradachse (1) drehfest angeordneten Zellenradstegen (2,3), welche Zellenradachse (1) innerhalb eines Gehäuses (4-6) mittels je eines im Bereich der Enden der Zellenradachse (1) befindlichen, gehäusefesten Seitendeckels (21) und der jeweils darin befindlichen Lageranordnung (26) gelagert ist, wobei im Bereich jedes Seitendeckels (21) eine axial seitlich der Zellenradstege (2, 3) befindliche, in eine innere (7) und äußere Seitenscheibe (13) zweifach geteilte, Seitenscheibe (7, 13) angeordnet ist, wobei zwischen Gehäuse (4-6) und Seitenscheiben (7, 13) eine radial wirkende Dichtungsanordnung (10) angeordnet ist und wobei die innere Seitenscheibe (7) mit dem Zellenrad (1-3) drehfest verbunden ist und die äußere Seitenscheibe (13) dem jeweiligen Seitendeckel (21) zugeordnet ist, **dadurch gekennzeichnet, daß** die äußere Seitenscheibe (13) an dem Seitendeckel (21) drehbar befestigt ist, wodurch die innere (7) und die äußere Seitenscheibe (13) gemeinsam drehen können, jedoch gegeneinander eine Verschiebebewegung zumindest in radialer Richtung ausführen können.

2. Zellenradschleuse nach Anspruch 1, **dadurch gekennzeichnet, daß** die radial wirkende Dichtungsanordnung (10) zwischen der inneren (7) und der äußeren Seitenscheibe (13) angeordnet ist und dadurch auch axial dichtend wirkt.

3. Zellenradschleuse nach einem der Ansprüche 1 oder 2, **dadurch gekennzeichnet, daß** die innere Seitenscheibe (7) mit der Zellenradachse (1) oder mit den Zellenradstegen (2,3), verbunden ist.

4. Zellenradschleuse nach einem der Ansprüche 1 bis 3, **dadurch gekennzeichnet, daß** die zwischen der inneren (7) und äußeren Seitenscheibe (13) entfernbar angeordnete Dichtungsanordnung (10) mehrteilig ausgebildet ist.

5. Zellenradschleuse nach einem der Ansprüche 1 bis 4, **dadurch gekennzeichnet, daß** die äußere Seitenscheibe (13) über ein Lager (16), welches auf einer Nabe (17) angeordnet ist, an dem Seitendeckel (21) drehbar befestigt ist.

6. Zellenradschleuse nach Anspruch 5, **dadurch gekennzeichnet, daß** die Seitendeckel (21) mitsamt ihren Lagern (26) und der äußeren Seitenscheiben (13) mit Naben (17) und Lagern (16) axial von der Zellenradachse(1) abgezogen werden können und somit die Dichtungsanordnung (10) zugänglich gemacht wird.

7. Zellenradschleuse nach einem der Ansprüche 1 bis 6, **dadurch gekennzeichnet, daß** die Dichtungsanordnung (10) lösbar in einer entsprechenden Ausnehmung der äußeren Seitenscheibe (13) liegt.

8. Zellenradschleuse nach einem der Ansprüche 2 bis 7, **dadurch gekennzeichnet, daß** jeweils zwischen der inneren Seitenscheibe (7) und der äußeren Seitenscheibe (13) zusätzlich eine axial wirkende Dichtungsanordnung (11, 12) angeordnet ist.

## Claims

1. Cellular rotary valve with a quick-change seal arrangement for feeding bulk material into pneumatic conveyers, comprising a cellular wheel (1-3) in the form of cellular wheel webs (2, 3) arranged in a non-rotary manner on a cellular wheel axis (1); and the cellular wheel axis (1) is mounted within a casing (4 - 6) by means of a respective side cover (21), which is located in the area of the ends of the cellular wheel axis (1) and fixed to the casing, and a therein located respective mounting arrangement (26); and in the area of each side cover (21) is arranged a side plate (7, 13), located axially at the side of the cellular wheel webs (2, 3) and twice divided into an inner (7) and an outer side plate (13); and between casing (4 - 6) and side plates (7, 13) is arranged a radially effective seal arrangement (10), and the inner side plate (7) is in a non-rotary manner connected to the cellular wheel (1 - 3), and the outer side plate (13) is associated with the respective side cover (21), **characterised in that** the outer side plate (13) is in a rotary manner attached to the side cover (21), so that the inner (7) and the outer side plate (13) can jointly rotate whilst being able to execute a movement of displacement relative to each other at least in the radial direction.

2. Cellular rotary valve according to Claim 1, **characterised in that** the radially effective seal arrangement (10) is arranged between the inner (7) and the outer side plate (13), thus also being axially effective.

3. Cellular rotary valve according to one of Claim 1 or 2, **characterised in that** the inner side plate (7) is connected to the cellular wheel axis (1) or to the cellular wheel webs (2, 3).

4. Cellular rotary valve according to one of Claims 1 to 3, **characterised in that** the seal arrangement (10) which is removably arranged between the inner (7) and the outer side plate (13) is composed of a plurality of parts.

5. Cellular rotary valve according to one of Claims 1 to 4, **characterised in that** the outer side plate (13) is in a rotary manner mounted, via a mounting (16) on a hub (17), on the side cover (21).

6. Cellular rotary valve according to Claim 5, **characterised in that** the side covers (21) including their mountings (26) and the outer side plates (13) with hubs (17) and mountings (16) can be axially pulled off the cellular rotary axis (1), thus allowing access to the seal arrangement (10).

7. Cellular rotary valve according to one of Claims 1 to 6, **characterised in that** the cellular seal arrangement (10) is releasably placed in a respective cutout of the outer side plate (13).

8. Cellular rotary valve according to one of Claims 2 to 7, **characterised in that** between the respective inner side plate (7) and the outer side plate (13) is additionally arranged an axially effective seal arrangement (11, 12).

## Revendications

1. Vanne ou sas à roue cellulaire avec dispositif d'étanchéité à changement rapide, pour le transfert compartimenté de produits en vrac dans des installations de transport pneumatique, contenant une roue cellulaire (1 à 3) réalisée sous la forme de pales de roue cellulaire (2, 3) calées angulairement sur un axe de roue cellulaire (1), l'axe de roue cellulaire (1) étant monté à l'intérieur d'un carter (2 à 6) chaque fois au moyen d'un couvercle latéral (21) fixé au carter, se trouvant dans la zone des extrémités de l'axe de roue cellulaire (1), et du dispositif de palier (26) s'y trouvant chaque fois, dans la zone de chaque couvercle latéral (21) étant disposé un disque latéral (7, 13) se trouvant axialement à côté des pales de roue cellulaire (2, 3), divisé en deux, en un disque latéral intérieur (17) et un disque latéral extérieur (13), entre les carters (4 à 6) et les disques latéraux (7, 13) étant disposé un dispositif d'étanchéité (10) à effet radial et le disque latéral intérieur (7) étant relié de façon assujettie en rotation à la roue cellulaire (1 à 3) et le disque latéral extérieur (13) étant associé au couvercle latéral (21) respectif, **caractérisée en ce que** le disque latéral extérieur (13) est fixé de façon à pouvoir tourner sur le couvercle latéral (21), faisant que le disque latéral intérieur (7) et le disque latéral extérieur (13) puissent tourner conjointement, en pouvant cependant effectuer, au moins en direction radiale l'un par rapport à l'autre, un mouvement de déplacement.

2. Vanne à roue cellulaire selon la revendication 1, **caractérisée en ce que** le dispositif d'étanchéité (10) à effet radial est disposé entre le disque latéral intérieur (7) et le disque latéral extérieur et agit de ce fait également en assurant une étanchéité axialement.

3. Vanne à roue cellulaire selon l'une des revendications 1 ou 2, **caractérisé en ce que** le disque latéral intérieur (7) est relié à l'axe de roue cellulaire (1) ou aux pales de roue cellulaire (2, 3).

4. Vanne à roue cellulaire selon l'une des revendications 1 à 3, **caractérisé en ce que** le dispositif d'étanchéité (10) disposé de façon amovible, entre le disque latéral intérieur (7) et le disque latéral extérieur (13), est réalisé en plusieurs parties.

5. Vanne à roue cellulaire selon l'une des revendications 1 à 4, **caractérisé en ce que** le disque latéral extérieur (13) est fixé de façon à pouvoir tourner sur le couvercle latéral (21), par l'intermédiaire d'un palier (16) disposé sur un moyeu (17).

6. Vanne à roue cellulaire selon la revendication 5, **caractérisée en ce que** les couvercles latéraux (21) peuvent être extraits axialement de l'axe de roue cellulaire (1), avec leurs paliers (26) et les disques latéraux extérieurs (13) avec les moyeux (17), et les paliers (16), faisant ainsi que le dispositif d'étanchéité (10) est rendu accessible.

7. Vanne à roue cellulaire selon l'une des revendications 1 à 6, **caractérisée en ce que** le dispositif d'étanchéité (10) est monté de façon désolidarisable dans un évidement correspondant du disque latéral extérieur (13).

8. Vanne à roue cellulaire selon l'une des revendications 2 à 7, **caractérisée en ce que** chaque fois entre le disque latéral intérieur (7) et le disque latéral extérieur (13) est disposé, en plus, un dispositif d'étanchéité (11, 12) à effet axial.
